(19) Europäisches Patentamt

European Patent Office

Office européen des brevets

(11) EP 0 940 079 A1

(12) **EUROPEAN PATENT APPLICATION**

(43) Date of publication:
08.09.1999 Bulletin 1999/36

(51) Int Cl.$^6$: **A01M 7/00**

(21) Application number: 99610016.0

(22) Date of filing: 02.03.1999

(84) Designated Contracting States:
**AT BE CH CY DE DK ES FI FR GB GR IE IT LI LU MC NL PT SE**
Designated Extension States:
**AL LT LV MK RO SI**

(30) Priority: 03.03.1998 DK 29198

(71) Applicant: **HARDI INTERNATIONAL A/S**
**2630 Taastrup (DK)**

(72) Inventor: **Secher, Bo Jorgen Morch**
**3460 Birkerod (DK)**

(74) Representative: **Wittrup, Flemming et al**
**c/o Hofman-Bang & Boutard, Lehmann & Ree A/S,**
**Hans Bekkevolds Allé 7**
**2900 Hellerup (DK)**

Remarks:
A request for correction of the description and of the drawings has been filed pursuant to Rule 88 EPC. A decision on the request will be taken during the proceedings before the Examining Division (Guidelines for Examination in the EPO, A-V, 3.).

(54)     **A method of dispensing a crop protecting agent**

(57)     The invention relates to a method of optimising the dosage per unit of field area of a liquid crop protecting agent that is sprayed by means of a field sprayer over a cropped field area, said field sprayer being advanced across said field area. The invention is characterised in that an estimation is carried out of the density of the crops per unit of field area in a relevant growth stage, preferably expressed as the total leaf area per unit of field area; that a first set of data is determined which - for the crops in the relevant growth stage - represents information 1) on a target area in the crops expressed as a height level, and 2) on a target concentration of crop protecting agent expressed as a desired dosage of crop protecting agent per area unit of leaves of the crops in the relevant target area; that a second set of data is determined which - for the crops in the relevant growth stage and as a function of the height level within the crops - represents the retention on the crop's leaves of a downwardly flowing crop protecting agent sprayed from a locality above the crop; that, based on the estimated values for the density of the crops per unit of field area and said first and second sets of data, a determination according to position is carried out of a dosage per unit of field area for accomplishing said target concentration; and that the dosage thus determined is sprayed from the field sprayer.

Relative height (%)

Relative area (Sum = 100)

FIG. 2a                    FIG. 2b

EP 0 940 079 A1

**Description**

The present invention relates to a method of optimising the dosage per unit of field area of a liquid crop protecting agent that is ejected over a cropped field area from a field sprayer that is advanced across said field area. The term 'crop protecting agent' is used in this context to designate eg pesticides, fungicides or the like agents for combating or preventing diseases/pests in a crop, or growth regulators.

As a consequence of the general change in environmental requirements, the users of such crop protecting agents are increasingly interested in obtaining, to the highest degree possible, optimal utilisation of the chemicals sprayed out. To satisfy such requirements, field sprayers have been developed over time that, in a variety of ways, aim to reduce excessive consumption, if any, of the crop protecting agent during spraying. Examples include the so-called air-assisted field sprayers wherein a potent jet of air is used to direct the chemical thus distributed in a specific direction, and hereby it is aimed to eliminate the risk of excessively dosing to compensate for wind drifting of the chemical. It is a further advantage of these types of field sprayers that to a certain extent the crop is 'opened' which enables the chemical to reach those areas of the crops where the crop protecting agent is to exercise its effect. Even with these prior art field sprayers, however, overdosing occurs to no negligible extent since, in practice, no regard is taken to the nature of the crop. The farmer will thus, to a wide extent, take his starting point in the spraying dosage recommended by the manufacturer of the spraying agent, and this dosage is often maintained constant during the spraying operation which means that each unit of field area receives such dosage.

The invention takes its starting point in the discovery of the inventor that a wide range of the diseases/pests to be prevented or combated have a need of combating that is concentrated in relatively well-defined areas a distance down into the crop. Expressed with the terminology used within this technical field, leaves in leaf levels L3, L4 or L5 will typically be afflicted by such diseases/pests, depending on the species. The term 'leaf level' can, in a conventional manner, represent counting of the leaves of the crop on the stem, leaf level L1 conventionally representing the top leaf. Albeit it is possible to determine the relevant target areas, there are, however no methods that are applicable in practice and enable reliable combating of said diseases/pests with an absolute minimum of overdosing.

Moreover, the invention relies on the fact that the growth conditions in a given field area will typically depend on the relevant position since the soil quality and the climatic conditions, including exposure to sun and humidity, can vary over the field area. In other words, the above-described maintained spray-dosing can, in certain cases, represent an extremely inadmissible overdosing in those field sections where the crop is very sparse or an underdosing where the crop is dense.

The method according to the invention aims to overcome the problems described above, the invention being characterised in

estimating the density of the crops per unit of field area in a relevant stage of growth, preferably expressed as the total leaf area per unit of field area;

determination of a first set of data that represents, for the crops in the relevant stage of growth, information 1) on a target area within the crops expressed as a height level, and 2) on a target concentration of crop protecting agent expressed as a desired dosage of crop protecting agent per leaf area unit of the crops in the relevant target area;

that a second set of data is determined that represents, for the crops in the relevant stage of growth and as a function of a height level within said crops, the retention by the leaves of the crops of a downwardly flowing crop protecting agent sprayed out from a locality above the crop;

that, based on the estimated values for the density of the crops per unit of field area and said first and second sets of data, a determination according to position of a dosage per unit of field area is carried out for accomplishing said target concentration; and

that the dosage determined in this way is distributed by spraying by the field sprayer.

In this manner, the invention enables determination of dosage with an unprecedented accuracy, since the invention avails itself exclusively of data that are readily determined empirically and can be presented in a readily accessible manner thereby allowing the desired dosage to be determined in a very short time.

Preferred embodiments are featured in claims 2-7. In particular, it is preferred - as featured in claim 6 - to carry out the estimation of the crop density immediately prior to the spraying which can conveniently occur by mounting of the equipment necessary for carrying out the estimation before the field sprayer.

The invention also relates to a knowledge-based system as featured in claim 8 whereby the problems described in the introductory part are solved in a particularly convenient manner.

Now the invention will be described with reference to an exemplary embodiment that shows a convenient representation of the ingoing sets of data and a system by which the invention can be exercised in a convenient manner.

Figure 1 shows an example of a measurement carried out from the air of the crop density in a field area

Figures 2a and 2c show curves of the relative field area in a given relative height of a crop and the retention, ie the dosage retained as a function of exposed leaf area, respectively, and Figure 2b is a schematic representation of the crop shown in Figure 2a; and

Figure 3 exemplifies a system whereby the invention can conveniently be exercised in practice.

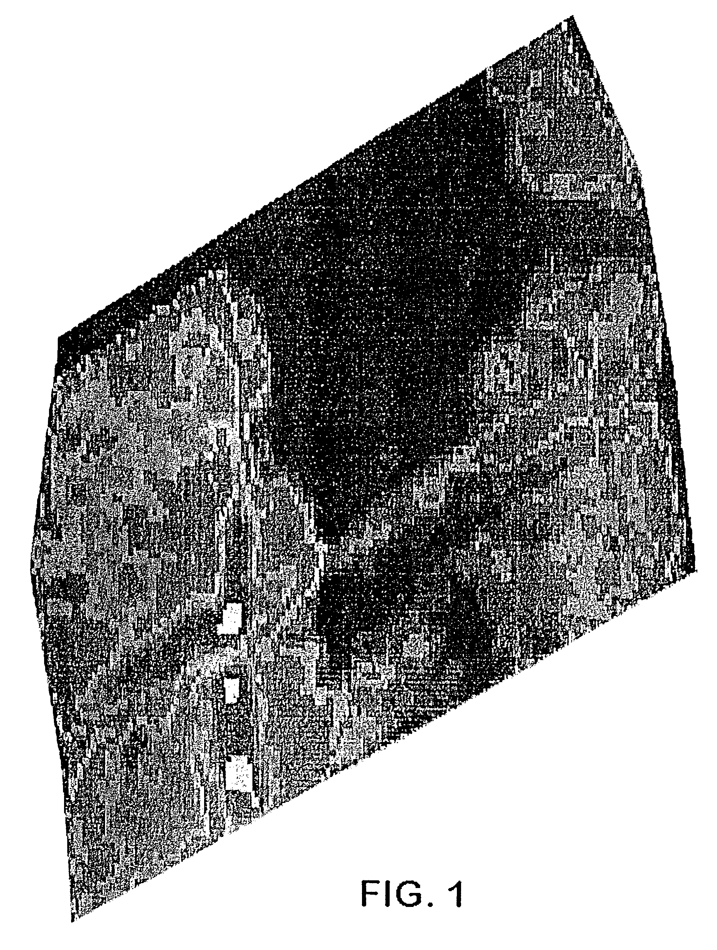

Figure 1 shows the result of spectral measurements of reflected light from a field area. On the basis of the measurements that can be carried out either from an aeroplane or from sensors located in front of a tractor that passes through the field area, it is possible to determine the diagram shown that shows where the crop is most dense. As shown, this can be represented by the dark portions, the light portions representing places with less dense crops. In the following the term "density" of the crop is used to designate the total leaf area of the crop species per unit of field area. The density can be calculated or estimated on the basis of the measurements of the intensity of reflected light at a given frequency per unit of field area on the basis of knowledge of the crop anatomy and physiology and field tests where measurements of the leaf area were carried out.

The subject matter depicted in Figure 1 illustrates the variation of the crop density in a typical field area, and it will be understood that this variation will usually occur as a consequence of varying soil conditions, including draining, or as a consequence of varying soil quality. Despite such conditions, there is no history that the ensuing variations in the need for chemicals have been taken into account during spraying of the field area, since a constant dosage is usually determined which is based on the farmer's experience. Typically the farmer's first choice will be to select a constant advancement rate for the field sprayer and subsequently to adjust the pump performance to obtain the desired dosage per unit of field area.

During the growth phase of a crop, a variety of diseases/pests will usually occur, and attempts are made to combat or alternatively prevent such occurrences by spraying a relevant crop protecting agent at the right time during the growth phase and in a required dosage. Such diseases/pests will, at the given point in time-and depending on the relevant affliction, be concentrated at specific height levels within the crop, or the need for combating will be confined to a specific level within the crop.

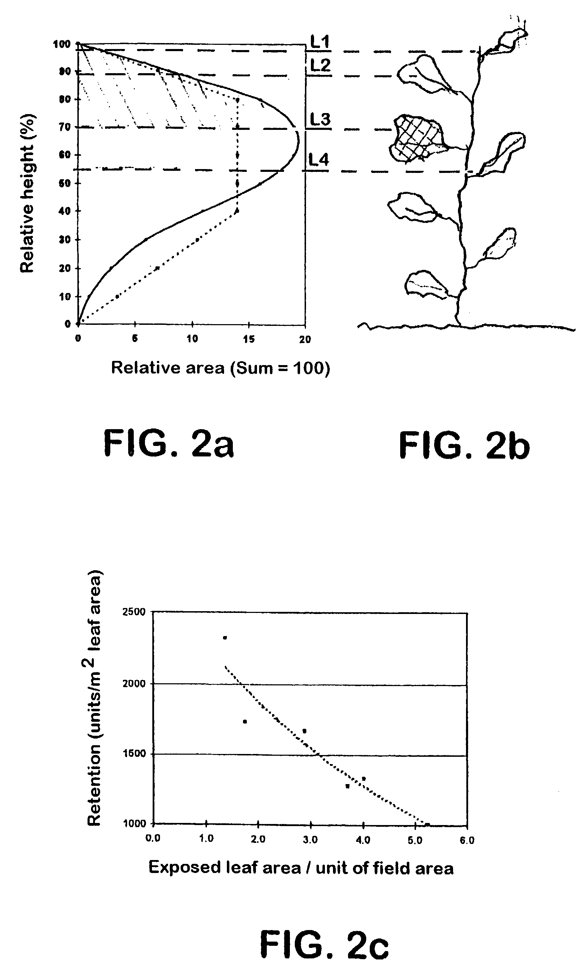

Figure 2a illustrates a curve that represents an example of the distribution of the relative crop leaf area expressed as a function of the relative height of the crop above ground level. In this context, the total leaf area of the crop is defined as the sum of the surface area of the individual leaves as illustrated by hatched line in

Figure 2b for a single leaf. The data on which the curve is based will generally depend of the crop species and the actual stage of growth, since the majority of the leaves can typically be situated relatively high up on the crop in advanced growth stages.

Figure 2b shows a simplified model of a crop with leaves that grow from the stem of the crop. The levels for the crop leaves can in the simplified model be represented by the leaf levels L1, L2, L3, and L4 indicated by dotted lines, and these leaf levels can represent target areas for the spraying, ie height levels wherein diseases may occur. Even though, of course, crops from a given species do not grow leaves with the regular distributions shown in Figure 2b, it is still possible to determine the target areas as permanent height levels in the crop since the potentially attacked leaves will be situated within a relatively modest distance above and below this height level.

Dotted lines in the curve shown in Figure 2a show horizontal lines that represent the leaf levels L1, L2, L3, L4 ... shown in Figure 2b. Assuming that Figure 2a illustrates the conditions for one crop of winter wheat in growth stage 50, it is a fact - by way of example - that at exactly at this point in time there is a need to spray against the fungal disease Yellow Rust. At the relevant point in time it is desired that this disease is treated effectively down to a relative height of about 55%, corresponding to leaf level L4. The fungal disease is combated by depositing the given crop protecting agent in a required dosage (target concentration) of x units per unit of leaf area, and in accordance with the invention this dosage is to be guaranteed in the relevant target area, ie in this case in level L4. To guarantee this target concentration, the invention allows for the crop mass, ie the portion of the total leaf area of a crop that is situated above the relevant target area. When the crop protecting agent is sprayed from a field sprayer in a plane above the crops there will be deposited a certain amount of crop protecting agent on the leaves in the upper portion of the crop, ie eg in that part of the plant which is not afflicted by the disease/pests. Thus, the deposited or retained portion above the target area does not reach the target area.

That part of the crop protecting agent that reaches a given area of the plant and which is deposited on the leaves in this area is, in the present application, designated the 'retention' which term is thus used to denote the part of the fluid retained on the relevant leaves.

According to one embodiment of the method, there is proceeded by determining the portion of the crop's leaf area, ie the crop mass, above the target area by determining in the curve shown in Figure 2a the total area (shown with hatched line) above the relevant leaf level, ie between the horizontal line L4 and the curve. Since the curve will typically be represented by discrete data values, an approximate determination of said area will typically occur. By multiplying the thus found portion by the plant density in a given area found in accordance with Figure 1, it is thus possible to determine the crop mass which will, in a given part of the field, be situated above the target area, ie above the height level where the crop disease/pests are found, or wherein a given minimum dosage is to be ensured. Study of the example shown in Figure 2a will reveal that the area above the line L4 constitutes about 65% of the total leaf area. Assuming that the plant density in the relevant area is estimated to be 7 - corresponding to a leaf area of 7m$^2$ per m$^2$ of field area - the crop mass above the target area can be determined to 65% of 7 - corresponding to about 4.55 m$^2$ of leaf area per m$^2$ of field area.

Figure 2c shows a further curve that can, for a given crop species, represent results from tests in which there has been ejected a predetermined amount of liquid crop protecting agent from a locality above a crop of the relevant crop species, wherein the amount of crop protecting agent retained is measured in different depths within the crop corresponding to different values for the exposed leaf area per unit of field area during passage of the agent. It is to be understood that the expression 'exposed leaf area per unit of field area' is used to designate the leaf area exposed during passage of the crop protecting agent down into the crop mass. On the basis of the above-mentioned calculated value for the crop mass through which the crop protecting agent is to flow, it is possible to determine a value for the retention corresponding to the relevant test. This is carried out by finding the retention corresponding to the calculated crop density. Since the curve shown in Figure 2c will be provided in the light of tests wherein the retention, ie the amount of active substance per unit of leaf area, following spraying of an active substance in a given amount per unit of field area, in different levels, it will - by the rule of three - be possible to achieve information on the value of the dosage per unit of field area that produces the desired target concentration in the target area.

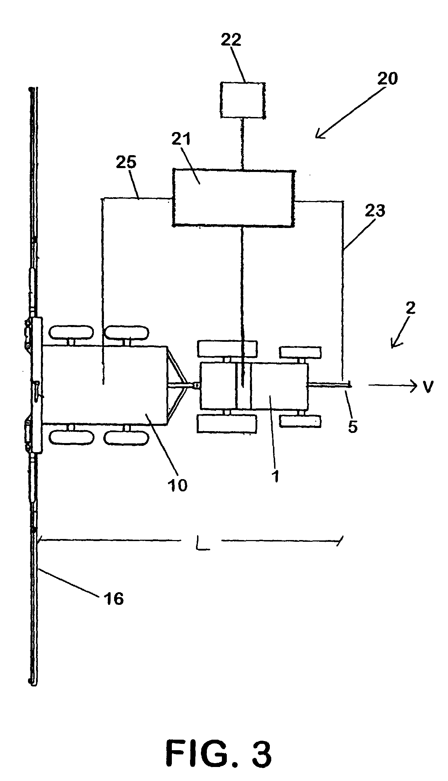

Figure 3 shows a system for convenient implementation of the invention. As will appear, the system 20 can be mounted in connection with a field sprayer 10 coupled to a tractor 1 and which does, in a conventional manner comprise a reservoir for crop protecting agent, a spray boom with spray nozzles 16 and a controllable pump to be operated for regulating the sprayed amount of crop protecting agent per unit of time. The user of the field sprayer will - for reasons of practicality - typically determine a constant rate of advancement v that preferably constitutes an input to the system 20.

As shown, there can be arranged a device 5 before the tractor 1 for measuring the reflected amount of raying at a given frequency from the field area 2 immediately prior to the tractor passing across this area 2. These measurements can be transferred to a calculation unit 21 in the system 20 via a line 23 that hereby receives information about the plant density in a point passed by the field sprayer 10 in a point in time

$$t=\left(\frac{L}{V}\right)^{-1}$$

at a later stage wherein L is at the distance shown in Figure 3 between the device 5 and the spray nozzles 16.

Prior to initiation of the spraying the farmer ensures that the necessary data for exercising the invention have been stored in the system 20. These sets of data can conveniently be stored in a memory 22. This is preferably a first set of data which, for the relevant crop species and in the relevant growth stage, represents information 1) on a target area in the crops expressed as a height level, and 2) on a target concentration of crop protecting agent expressed as a desired dosage per leaf area unit of the crops in the relevant target area. Moreover, a second set of data has been stored which, for the relevant growth stage, represents the retention of a downwardly flowing crop protecting agent on the leaves of a reference crop of the relevant crop species as described above with reference to Figures 2a and 2c.

During use of the system 20 information is included via the line 23 to the calculation unit whereupon the retention of the crop protection agent by exposure of the relevant crop thereto, ie at the relevant crop density, is determined. In the basis of the stored information about the location of the target area and the target concentration a dosage per unit of field area is determined which, with due regard to the actual retention, provides the desired target concentration for eliminating the crop disease against which there is sprayed. Information on the dosage thus determined by means of the calculation unit is transmitted via a line 25 to the pump, said signal being transmitted to the pump with a delay corresponding to the rate of advancement v.

It is to be noted that the invention lends itself readily for use in connection with already established density maps of the kind shown in Figure 1. In that case the maps can be established by over-flying a major field area, ie covering a plurality of different field areas belonging to different farmers. By transmitting the data derived from the maps to a memory and simultaneously providing the field sprayer with GPS equipment that determines the position of the moment of the field sprayer 10 and transmits it to a calculation unit, it is possible by continuously deriving data from the memory to determine the optimum dosage by means of the method. Alternatively, a ready dosage map can be produced prior to the spraying which is transmitted to a computer in the tractor, where the dosage map can be compared to the position of the moment of the field sprayer.

**Claims**

1. A method of optimising the dosage per unit of field area of a liquid crop protecting agent that is sprayed by means of a field sprayer over a cropped field area, said field sprayer being advanced across said field area, **characterized in**

- that an estimation is carried out of the density of the crops per unit of field area in a relevant growth stage, preferably expressed as the total leaf area per unit of field area;

- that a first set of data is determined which - for the crops in the relevant growth stage - represents information 1) on a target area in the crops expressed as a height level, and 2) on a target concentration of crop protecting agent expressed as a desired dosage of crop protecting agent per area unit of leaves of the crops in the relevant target area;

- that a second set of data is determined which - for the crops in the relevant growth stage and as a function of the height level within the crops - represents the retention on the crop's leaves of a downwardly flowing crop protecting agent sprayed from a locality above the crop;

- that, based on the estimated values for the density of the crops per unit of field area and said first and second sets of data, a determination according to position is carried out of a dosage per unit of field area for accomplishing said target concentration; and

  that the dosage thus determined is sprayed from the field sprayer.

2. A method according to the preceding claim, **characterized** in that the second set of data comprises information on the distribution of the leaf area of the relevant crop expressed as a function of a height level within the crops; and information on the retention as a function of exposed leaf area per unit of field area.

3. A method according to any one of the preceding claims, **characterized** in that the dosage per unit of field area is determined by addition of the target concentration and the retention over the target area.

4. A method according to any one of the preceding claims, **characterized** in that the density of the crops is recorded in a memory.

5. A method according to any one of the preceding claims, **characterized** in that the first and the second sets of data are recorded in a memory.

6. A method according to any one of the preceding claims, **characterized** in that the estimation of the crop density and the determination according to position of dosage is carried out continuously during advancement of the field sprayer across the field area.

7. A method according to any one of the preceding claims, **characterized** in that the target concentration in the first set of data is determined as a damage-eliminating or damage-preventing concentration in the relevant target area.

8. A knowledge-based system for optimising the dosage per unit of field area of a liquid crop protecting agent sprayed by means of a field sprayer over a cropped field area, said field sprayer being advanced across the field area, **characterized** in that the system comprises a computer with

- a memory for storing a knowledge base, said knowledge base comprising a first set of data which - for the crops in the relevant growth stage - represents information 1) on a target area in the plants expressed as a height level, and 2) on a target concentration of crop protecting agent expressed as a desired dosage per leaf area unit of the crops in the relevant target area, and a second set of data which - for the crops in the relevant growth stage and as a function of a height level of the plants - represents the retention on the crop's leaves in the relevant height level of a downwardly flowing crop protecting agent sprayed from a locality above the crop,
- a memory for storing data representing the density of the crops per unit of field area,
- a calculation unit based on the stored data representing the density of the crops per unit of field area and the said first and second sets of data, for carrying out a determination according to position of a dosage per unit of field area for accomplishing said target concentration.

FIG. 1

EP 0 940 079 A1

FIG. 2a

FIG. 2b

FIG. 2c

FIG. 3

| | European Patent Office | EUROPEAN SEARCH REPORT | Application Number EP 99 61 0016.0 |
|---|---|---|---|

## DOCUMENTS CONSIDERED TO BE RELEVANT

| Category | Citation of document with indication, where appropriate, of relevant passages | Relevant to claim | CLASSIFICATION OF THE APPLICATION (Int. Cl.6) |
|---|---|---|---|
| A | US 5278423 A (WANGLER ET AL.), 11 January 1994 (11.01.94) -- | 1-8 | A01M 7/00 |
| A | DE 4132637 A1 (KüHBAUCH, WALTER), 8 April 1993 (08.04.93) -- | 1-8 | |
| A | EP 0743001 A1 (M. JACOBY GMBH & CO. KG), 20 November 1996 (20.11.96) -- | 1-8 | |
| A | US 5222324 A (O'NEALL ET AL.), 29 June 1993 (29.06.93) -- | 1-8 | |
| A | WO 8912510 A1 (THE MINISTER FOR AGRICULTURE AND RURAL AFFAIRS OF THE STATE OF NEW SOUTH WALES), 28 December 1989 (28.12.89) ----- | 1-8 | TECHNICAL FIELDS SEARCHED (Int. Cl.6) A01M |

The present search report has been drawn up for all claims

| Place of search STOCKHOLM | Date of completion of the search 8 June 1999 | Examiner JÖRGEN WINTHER |
|---|---|---|

CATEGORY OF CITED DOCUMENTS

X : particularly relevant if taken alone
Y : particularly relevant if combined with another document of the same category
A : technological background
O : non-written disclosure
P : intermidiate document

T : theory or principle underlying the invention
E : earlier patent document, but published on, or after the filing date
D : document cited in the application
L : document cited for other reasons

                                           
& : member of the same patent family, corresponding document

EPO FORM 1503 03.82 (P0401)

**ANNEX TO THE EUROPEAN SEARCH REPORT
ON EUROPEAN PATENT APPLICATION NO.** EP 99 61 0016.0

This annex lists the patent family members relating to the patent documents cited in the above-mentioned European search report.
The members are as contained in the European Patent Office EDP file on 03/05/99
The European Patent Office is in no way liable for these particulars which are merely given for the purpose of information.

| Patent document cited in search report | | | Publication date | Patent family member(s) | | | Publication date |
|---|---|---|---|---|---|---|---|
| US | 5278423 | A | 11/01/94 | US | 5546188 | A | 13/08/96 |
| | | | | US | 5757472 | A | 26/05/98 |
| | | | | US | 5793491 | A | 11/08/98 |
| | | | | WO | 9416315 | A | 21/07/94 |
| DE | 4132637 | A1 | 08/04/93 | NONE | | | |
| EP | 0743001 | A1 | 20/11/96 | DE | 19518058 | A | 05/12/96 |
| US | 5222324 | A | 29/06/93 | NONE | | | |
| WO | 8912510 | A1 | 28/12/89 | AU | 3777589 | A | 12/01/90 |
| | | | | CA | 1330362 | A | 21/06/94 |
| | | | | DE | 68912126 | D,T | 09/06/94 |
| | | | | EP | 0420896 | A,B | 10/04/91 |
| | | | | US | 5144767 | A | 08/09/92 |

EPO FORM P0459

For more details about this annex : see Official Journal of the European Patent Office, No. 12/82